(19) Europäisches Patentamt
European Patent Office
Office européen des brevets

(11) **EP 4 628 302 A1**

(12) **EUROPEAN PATENT APPLICATION**
published in accordance with Art. 153(4) EPC

(43) Date of publication:
08.10.2025 Bulletin 2025/41

(21) Application number: 23897773.0

(22) Date of filing: 28.11.2023

(51) International Patent Classification (IPC):
*B32B 27/36* (2006.01)      *B32B 7/027* (2019.01)
*B32B 15/09* (2006.01)      *B32B 27/20* (2006.01)
*B60R 13/00* (2006.01)

(52) Cooperative Patent Classification (CPC):
B32B 7/027; B32B 15/09; B32B 27/20;
B32B 27/36; B60R 13/00

(86) International application number:
PCT/JP2023/042545

(87) International publication number:
WO 2024/117125 (06.06.2024 Gazette 2024/23)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(30) Priority: 30.11.2022 JP 2022192070

(71) Applicant: Toyobo Co., Ltd.
Kita-ku
Osaka-shi, Osaka 530-0001 (JP)

(72) Inventors:
• TSUCHIYA, Keiji
  Inuyama-shi, Aichi 484-8508 (JP)
• KUBO, Koji
  Inuyama-shi, Aichi 484-8508 (JP)

(74) Representative: Vossius & Partner
Patentanwälte Rechtsanwälte mbB
Siebertstrasse 3
81675 München (DE)

(54) **COATING SUBSTITUTE FILM, LAMINATE, METAL MEMBER, VEHICLE EXTERIOR COMPONENT, AND METHOD FOR PRODUCING LAMINATE**

(57) A paint substitute film including a laminated film including an A layer and a B layer, in which the plane orientation coefficient of the B layer is 1.65 or more and 1.80 or less, the melting point TmB of the B layer is higher than the melting point TmA of the A layer and the melting point difference TmB-TmA is 25°C or more and 35°C or less, and the residual rate of internal stress in a tensile test at 100°C (specifically, the residual rate of internal stress determined by $|1 - (Ub/Ua)| \times 100$) is 25% or less in both the flow direction and width direction of the laminated film.

[FIG. 1]

EP 4 628 302 A1

# EP 4 628 302 A1

**Description**

TECHNICAL FIELD

The present invention relates to a paint substitute film that exhibits favorable adhesion properties to metal and excellent appearance design by, for example, being covered on the metal of outer plates of a vehicle such as a motor vehicle instead of painting.

BACKGROUND ART

Conventionally, spray painting has been commonly used to improve the design of metal exterior components of vehicles. However, in recent years, painting steps including such spray painting require large facilities and space to repeat painting and drying, this reduces productivity, and thus a method in which the appearance of products is improved by pasting a decorative film (hereinafter referred to as a paint substitute film) to the exterior components has been investigated for the purpose of rationalizing the painting steps, and the like.

Patent Document 1 proposes a heat sealable film as a film that can be physically attached to a metal foil and a metal plate. Specifically, by using a polyester B layer that is slightly oriented in the plane direction so as to have a refractive index of 1.500 or more in the thickness direction and a heat seal layer that has a thickness of 4 to 40 μm, is constituted of a polymer having a number average molecular weight of 15,000 or more, and comes into contact with the polyester B layer, delamination within the B layer is suppressed and the decrease in adhesive strength is reduced.

Patent Document 2 proposes that the polyester film has an excellent appearance design required for the outer plates of motor vehicles and the like and exerts favorable adhesion properties to metal as the refractive index in the thickness direction of the B layer is less than 1.500 and the melting point difference between the B layer and the adhesive layer is 20°C or more in the two-layer polyester film consisting of a B layer and an adhesive layer.

PRIOR ART DOCUMENT

PATENT DOCUMENTS

     Patent Document 1: JP-A-2006-1114
     Patent Document 2: JP-A-2020-192787

SUMMARY OF THE INVENTION

PROBLEMS TO BE SOLVED BY THE INVENTION

In a case where a laminated metal plate obtained by laminating a paint substitute film on a metal plate for vehicles, for example, a steel plate or an aluminum alloy plate, is press-formed into an exterior member for vehicles, problems such as tearing and peeling off of the film may occur by the springback phenomenon immediately after forming when the adhesion of the paint substitute film with the metal plate is insufficient. An object of the present invention is to provide a paint substitute film that exerts excellent adhesive properties to a metal plate during press forming and exhibits excellent appearance design primarily for use as exterior members for vehicles.

MEANS FOR SOLVING THE PROBLEMS

As a result of extensive studies conducted by the present inventors to achieve the object, it has been found out that the laminated film exhibits excellent formability while securing adhesive strength to metal as the laminated film exhibits stress-strain curve characteristics similar to those of a metal plate and the adhesive layer exhibits a lower melting point than the forming layer in a laminated film including a B layer (hereinafter sometimes referred to as the "forming layer") and an A layer (hereinafter sometimes referred to as the "adhesive layer"). Based on this, the present inventors have conducted further studies and made improvements, and thus have completed the invention represented below.

[1] A paint substitute film that is a laminated film including at least two layers of an A layer and a B layer, in which the A layer is a layer containing a crystalline polyester as a main constituent, the B layer is a layer containing a crystalline polyester as a main constituent, a plane orientation coefficient of the B layer is 0.165 or more and 0.180 or less, a melting point $TmB$ of the B layer is higher than a melting point $TmA$ of the A layer and a melting point difference $TmB-$

TmA is 25°C or more and 35°C or less, a stress at 20% elongation in a tensile test at 100°C: F20 value is 60 MPa or more and 110 MPa or less in both a flow direction and a width direction of the laminated film, and a residual rate of internal stress expressed by the following Equation 1 in a tensile test at 100°C is 25% or less in both a flow direction and a width direction of the laminated film.

Residual rate of internal stress (%) = |1 - (Ub/Ua)| $\times$ 100                                       Equation 1

Here, the tensile test is performed by a method in which a 15 mm wide test piece used as a sample is pulled at a chuck distance of 50 mm and a tensile speed of 1000 mm/min to 20% elongation and returned to a chuck distance of 50 mm at a speed of 2000 mm/min after 20% elongation, the Ua refers to elastic strain energy from a starting point 0 to a yield point in a stress-strain curve obtained from the tensile test, and the Ub refers to elastic strain energy when the test piece is returned from 20% elongation to a chuck distance in the stress-strain curve obtained from the tensile test.

[2] The paint substitute film according to [1], in which a plane orientation coefficient of the A layer is smaller than the plane orientation coefficient of the B layer by 0.03 or more.

[3] The paint substitute film according to [1] or [2], in which a sum of a shrinkage rate in a flow direction and a shrinkage rate in a width direction of the laminated film is 1.0% or more and 5.0% or less.

[4] The paint substitute film according to any one of [1] to [3], in which a peel strength is 10 N/20 mm or more when a surface of the A layer of the laminated film and a metal substrate are laminated at 230°C.

[5] The paint substitute film according to any one of [1] to [4], in which an easy-adhesion layer having at least one functional group selected from the group consisting of an epoxy group, an oxazoline group, a silanol group, and an isocyanate group and at least one functional layer selected from the group consisting of a surface protective layer and a colored layer are laminated on a surface on a B layer side of the laminated film in this order.

[6] The paint substitute film according to [5], in which the colored layer contains a coloring agent at 0.5% by mass or more and less than 40% by mass with respect to 100% by mass of a resin composition constituting the colored layer.

[7] The paint substitute film according to [5] or [6], in which the surface protective layer contains at least one selected from the group consisting of a thermosetting resin and a photocurable resin as a main constituent.

[8] The paint substitute film according to any one of [5] to [7], in which the easy-adhesion layer has a thickness of 10 nm to 200 nm.

[9] The paint substitute film according to any one of [1] to [8], in which an easy-adhesion layer having at least one functional group selected from the group consisting of an epoxy group, an oxazoline group, a silanol group, and an isocyanate group, a colored layer, and a surface protective layer are laminated on a surface on a B layer side of the laminated film in this order.

[10] The paint substitute film according to [9], in which the colored layer contains a coloring agent at 0.5% by mass or more and less than 40% by mass with respect to 100% by mass of a resin composition constituting the colored layer.

[11] The paint substitute film according to [9] or [10], in which the surface protective layer contains at least one selected from the group consisting of a thermosetting resin and a photocurable resin as a main constituent.

[12] The paint substitute film according to any one of [9] to [11], in which the easy-adhesion layer has a thickness of 10 nm to 200 nm.

[13] A film-covered metal laminated body including a metal plate laminated on the paint substitute film according to any one of [1] to [12].

[14] A metal member obtained by press-forming the film-covered metal laminated body according to [13].

[15] A vehicle exterior component obtained using the film-covered metal laminated body according to [13].

[16] A method for producing a film-covered metal laminated body using the paint substitute film according to any one of [1] to [12], the method including heating a metal plate to a temperature T that is equal to or more than a melting point TmA of the A layer of the paint substitute film and equal to or less than a melting point TmB of the B layer and thermocompression-bonding the metal plate and a surface on an A layer side of the paint substitute film.

The present invention can also be expressed as having the following configuration [21].

[21] A paint substitute film comprising a laminated film including an A layer and a B layer, wherein

the A layer contains a first crystalline polyester as a main constituent,
the B layer contains a second crystalline polyester as a main constituent,
a plane orientation coefficient of the B layer is 0.165 or more and 0.180 or less,
a melting point of the B layer is higher than a melting point of the A layer and a difference between the melting point of the B layer and the melting point of the A layer is 25°C or more and 35°C or less,
a residual index rate of internal stress is 25% or less in both a flow direction and a width direction of the laminated film when a tensile test is performed on the laminated film,

the residual index rate is expressed by |1 - (Ub/Ua)| × 100,

the tensile test is performed by a method in which a 15 mm wide test piece is held between a pair of chucks with a chuck distance of 50 mm, the chuck distance is increased until 20% strain is generated at a tensile speed of 1000 mm/min and 100°C, and then the chuck distance is returned to 50 mm at a speed of 2000 mm/min and 100°C, the Ua is a value determined by integrating a stress-strain curve obtained from the tensile test from 0% strain to a yield strain, and

the Ub is a value determined by integrating the stress-strain curve from 20% strain to a strain at which a stress is 0 MPa.

It is preferable that the present invention further has the following configuration [22] and subsequent configurations.

[22] The paint substitute film according to [21], in which the laminated film has a 20% strain tensile stress of 60 MPa or more and 110 MPa or less in both the flow direction and the width direction in the tensile test.

[23] The paint substitute film according to [21] or [22], in which the plane orientation coefficient of the B layer is larger than a plane orientation coefficient of the A layer and a difference between the plane orientation coefficient of the B layer and the plane orientation coefficient of the A layer is 0.03 or more.

[24] The paint substitute film according to any one of [21] to [23], in which a sum of a heat shrinkage rate in the flow direction and a heat shrinkage rate in the width direction is 1.0% or more and 5.0% or less when the laminated film is subjected to a heat treatment at 150°C for 15 minutes.

[25] The paint substitute film according to any one of [21] to [24], in which a peel strength is 10 N/20 mm or more when the paint substitute film is laminated on a metal substrate at 230°C so that the A layer is in contact with the metal substrate and then peeled off from the metal substrate at a tensile speed of 50 mm/min and 180°.

[26] The paint substitute film according to any one of [21] to [25], further including: an easy-adhesion layer provided on a surface of the B layer of the laminated film; and a functional layer, in which the A layer, the B layer, the easy-adhesion layer, and the functional layer are disposed in this order, and the functional layer includes at least one of a colored layer or a surface protective layer.

[27] The paint substitute film according to [26], in which the easy-adhesion layer contains a resin having at least one functional group selected from the group consisting of an epoxy group, an oxazoline group, a silanol group, and an isocyanate group.

[28] The paint substitute film according to [26] or [27], in which the functional layer includes the colored layer and the surface protective layer, and the A layer, the B layer, the easy-adhesion layer, the colored layer, and the surface protective layer are disposed in this order.

[29] The paint substitute film according to any one of [26] to [28], in which the functional layer includes the colored layer, and the colored layer contains a coloring agent at 0.5% by mass or more and less than 40% by mass with respect to 100% by mass of a resin composition constituting the colored layer.

[30] The paint substitute film according to any one of [26] to [29], in which the functional layer includes the surface protective layer, and the surface protective layer contains at least one of a thermosetting resin or a photocurable resin.

[31] The paint substitute film according to any one of [26] to [30], in which the easy-adhesion layer has a thickness of 10 nm to 200 nm.

[32] A laminated body including: a metal plate; and the paint substitute film according to any one of [21] to [31] that is laminated on the metal plate.

[33] A metal member obtained by press-forming the laminated body according to [32].

[34] A vehicle exterior component including the laminated body according to [32].

[35] A method for producing a laminated body, the method including: a step of heating a metal plate to a temperature that is equal to or more than the melting point of the A layer in the paint substitute film according to any one of [21] to [31] and equal to or less than the melting point of the B layer; and a step of pressure-bonding the metal plate heated to the temperature and the paint substitute film so that the metal plate and the A layer are in contact with each other. [36] The paint substitute film according to any one of [21] to [31], in which the sum of the heat shrinkage rate in the flow direction and the heat shrinkage rate in the width direction is 4.8% or less.

[37] The paint substitute film according to any one of [21] to [31], in which the sum of the heat shrinkage rate in the flow direction and the heat shrinkage rate in the width direction is 4.5% or less.

[38] The paint substitute film according to any one of [21] to [31], in which the sum of the heat shrinkage rate in the flow direction and the heat shrinkage rate in the width direction is 4.2% or less.

[39] The paint substitute film according to any one of [21] to [31], in which the sum of the heat shrinkage rate in the flow direction and the heat shrinkage rate in the width direction is 4.0% or less.

EFFECT OF THE INVENTION

The paint substitute film of the present invention can exert excellent adhesive strength to various kinds of metals and excellent formability, and can provide a metal member excellent in appearance design that is free from appearance defects caused by tearing and peeling off of the film after press forming. The paint substitute film of the present invention can provide the value of eliminating the painting step in the production of metal members.

BRIEF DESCRIPTION OF THE DRAWINGS

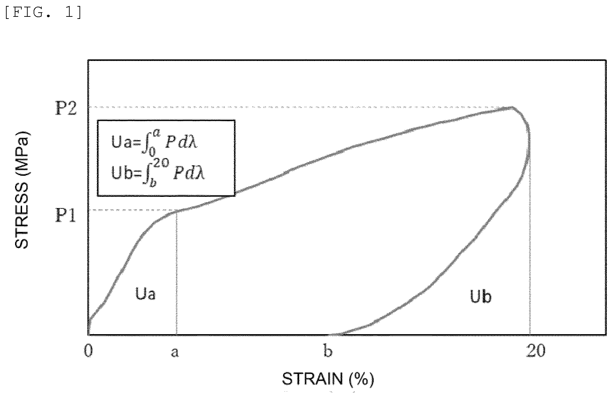

**Fig.** 1 is a view illustrating the concept of a calculation formula for the residual rate of internal stress.

MODE FOR CARRYING OUT THE INVENTION

The paint substitute film according to an embodiment of the present invention includes a laminated film including an A layer and a B layer, in which the A layer contains a first crystalline polyester as a main constituent, the B layer contains a second crystalline polyester as a main constituent, a plane orientation coefficient of the B layer is 0.165 or more and 0.180 or less, a melting point of the B layer is higher than a melting point of the A layer and a difference between the melting point of the B layer and the melting point of the A layer is 25°C or more and 35°C or less, a residual index rate of internal stress is 25% or less in both a flow direction and a width direction of the laminated film when a tensile test is performed on the laminated film, the residual index rate is expressed by $|1 - (Ub/Ua)| \times 100$, the tensile test is performed by a method in which a 15 mm wide test piece is held between a pair of chucks with a chuck distance of 50 mm, the chuck distance is increased until 20% strain is generated at a tensile speed of 1000 mm/min and 100°C, and then the chuck distance is returned to 50 mm at a speed of 2000 mm/min and 100°C, the Ua is a value determined by integrating a stress-strain curve obtained from the tensile test from 0% strain to a yield strain, and the Ub is a value determined by integrating the stress-strain curve from 20% strain to a strain at which a stress is 0 MPa.

In the paint substitute film of the present embodiment, since the difference between the melting point of the B layer and the melting point of the A layer is 25°C or more, it is possible to enhance the fluidity of the A layer when the paint substitute film of the present embodiment is thermocompression-bonded to a metal plate, and therefore, the peel strength (specifically, the peel strength when the paint substitute film is peeled off from the metal plate) can be improved.

Moreover, since the residual index rate of internal stress is 25% or less (specifically, the residual index rate of internal stress is 25% or less in both the flow direction and width direction of the laminated film when a tensile test is performed on the laminated film), peeling off of the paint substitute film from the metal plate that may occur during or after press forming can be reduced or prevented. Specifically, it is possible to reduce or prevent the occurrence of peeling off of the paint substitute film that may occur when the paint substitute film of the present embodiment is thermocompression-bonded to a metal plate (for example, a steel plate or an aluminum alloy plate), and then this, that is, the laminated metal plate (hereinafter, sometimes referred to as a "film-covered metal laminated body" or "laminated body") including the metal plate and the paint substitute film laminated on the metal plate is press-formed, and the occurrence of peeling off of the paint substitute film that may occur after press forming. This will be explained below.

The residual index rate of internal stress is expressed by the following equation.

$$\text{Residual index rate of internal stress (\%)} = |1 - (Ub/Ua)| \times 100$$

$$= |(Ua - Ub)/Ua| \times 100$$

Ua and Ub in this equation can be determined based on the stress-strain curve obtained by a tensile test (specifically, a tensile test that is performed in the following order: a 15 mm wide test piece is held between a pair of chucks with a chuck distance of 50 mm, the chuck distance is increased until 20% strain is generated at a tensile speed of 1000 mm/min and 100°C, and then the chuck distance is returned to 50 mm at a speed of 2000 mm/min and 100°C). Here, the stress-strain curve is a graph in which stress is plotted on the vertical axis and strain on the horizontal axis (see Fig. 1).

As illustrated in Fig. **1,** Ua is a value determined by integrating the stress-strain curve from 0% strain to the yield strain, that is, the strain indicating the yield point. When the period from the start of pulling to the occurrence of yield strain is regarded as elastic deformation, Ua can be regarded as the elastic strain energy stored in the laminated film due to pulling.

Meanwhile, Ub is a value determined by integrating from 20% strain to the strain at which the stress is 0 MPa (hereinafter, sometimes referred to as "return strain" or "amount of return strain"). Ub is the energy released when the chuck distance returns from the chuck distance at which 20% strain is applied to the chuck distance of 50 mm at the start of pulling, that is, when the deformation of the laminated film (specifically, the deformation of the laminated film caused by pulling) is restored, and can therefore be said to be elastic strain energy.

If the balance between Ua and Ub is too poor, the elastic strain energy of the laminated film (specifically, the elastic strain energy stored in the laminated film by press forming) is not effectively released by springback that occurs when the laminated metal plate is press-formed, that is, the elastic strain energy is not effectively reduced, and thus excessive internal stress remains in the laminated film.

In contrast, according to the present embodiment, since the value calculated by $|(Ua - Ub)/Ua| \times 100$ (namely, the residual index rate of internal stress) is 25% or less, the elastic strain energy of the laminated film can be effectively released by springback that occurs when the laminated metal plate is press-formed, and therefore, excessive internal stress can be prevented from remaining in the laminated film. As a result, it is possible to reduce or prevent the occurrence of peeling off of the paint substitute film that may occur during or after press forming.

In a case where the paint substitute film of the present embodiment is thermocompression-bonded to a metal plate (for example, a steel plate or an aluminum alloy plate) for vehicles to obtain a laminated metal plate, and the laminated metal plate is press-formed into a vehicle exterior component, the occurrence of peeling off of the paint substitute film can be further reduced or prevented. This is because in a case where a laminated metal plate is press-formed, the paint substitute film is partly elongated, and the elongation is generally considered to be a maximum of about 20% for vehicle exterior components. The vehicle is preferably a motor vehicle, more preferably a four-wheeled motor vehicle.

The residual index rate of internal stress can be controlled, for example, by the plane orientation coefficient of the B layer, the ratio of the thickness of the B layer to the thickness of the laminated film, and the like. As the plane orientation coefficient of the B layer is higher, the residual index rate of internal stress tends to be smaller. As this ratio (specifically, the ratio of the thickness of the B layer to the thickness of the laminated film) is larger, the residual index rate of internal stress tends to be smaller.

Furthermore, since the plane orientation coefficient of the B layer is 0.165 or more, the generation of wrinkles and bubbles that may be caused when the paint substitute film of the present embodiment is thermocompression-bonded to a metal plate can be reduced. In other words, the appearance design of the laminated metal plate can be improved.

Therefore, according to the paint substitute film of the present embodiment, it is possible to reduce the generation of wrinkles and bubbles during thermocompression bonding and also to reduce or prevent peeling off of the paint substitute film from the metal plate that may occur during or after press forming. In other words, the paint substitute film of the present embodiment is capable of exerting excellent adhesive properties to a metal plate and can also exhibit excellent appearance design when thermocompression-bonded to a metal plate.

Hereinafter, embodiments of the present invention will be described in more detail. The flow direction is sometimes called the machine direction, or MD direction. The width direction is sometimes called the transverse direction, or TD direction. The stress at 20% elongation is sometimes referred to as the F20 value or 20% strain tensile stress. Strain is sometimes referred to as the amount of strain.

The paint substitute film of the present embodiment includes a laminated film including an A layer and a B layer. The A layer can mainly have the function of exerting adhesive properties to a metal plate. In other words, the A layer can function as an adhesive layer. Meanwhile, the B layer can have a function mainly associated with the deformation of the metal plate during press forming. In other words, the B layer can function as a forming layer. The paint substitute film of the present embodiment may further include other layers in addition to the A layer and the B layer. The other layers are mainly constituted of preferably polyester, more preferably crystalline polyester. The crystalline polyester will be described later.

The A layer and the B layer are mainly constituted of polyester. Here, the term "main constituent" indicates that the polyester accounts for preferably 60% by mass or more, more preferably 70% by mass or more, still more preferably 80% by mass or more, yet still more preferably 90% by mass or more based on the mass of the entire film.

The polyester constituting the A layer is preferably a crystalline polyester. The crystalline polyester referred to here can refer to that a baseline shift corresponding to the glass transition point and an endothermic peak of 0.05 J/g or more associated with crystalline melting on a temperature side higher than the baseline shift are observed when 10 mg of the polyester composition scraped off from the A layer is heated to 290°C at a rate of 20°C/min, then held at the same temperature for 3 minutes, rapidly cooled at a rate of 200°C/min, and then heated again to 290°C at a rate of 10°C/min using a DSC-60 type differential scanning calorimeter. As the polyester constituting the A layer, a homopolyester or a copolyester can be used. The polyester is preferably a copolyester having a eutectic point of 160°C to 250°C, more preferably a copolyester having a melting point of 180°C to 250°C. The copolyester is preferably one mainly constituted of an ethylene terephthalate unit. Here, the term "mainly constituted of" indicates that the ethylene terephthalate unit accounts for preferably 60 mol% or more, more preferably 70 mol% or more, still more preferably 80 mol% or more in the copolyester.

The copolymerized component of the copolyester may be an acid component or an alcohol component. Examples of the acid component include aromatic dicarboxylic acids other than the main acid components, such as isophthalic acid, phthalic acid, terephthalic acid, and 2,6-naphthalenedicarboxylic acid; and aliphatic dicarboxylic acids such as adipic acid, azelaic acid, and sebacic acid. Examples of the alcohol component include ethylene glycol, trimethylene glycol, and tetramethylene glycol, and include polyoxyalkylene glycols such as diethylene glycol. Examples of the alcohol component include an aliphatic diol such as 1,6-hexanediol and an alicyclic diol such as 1,4-cyclohexanedimethanol. These can be used singly or two or more kinds thereof can be used. Among these, isophthalic acid and sebacic acid are preferable, and isophthalic acid is particularly preferable.

The content of the crystalline polyester in the A layer is preferably 60% by mass or more, more preferably 70% by mass or more, still more preferably 80% by mass or more, still more preferably 90% by mass or more in 100% by mass of the A layer.

The polyester constituting the B layer is preferably a crystalline polyester. The crystalline polyester referred to here can refer to that a baseline shift corresponding to the glass transition point and an endothermic peak of 0.05 J/g or more associated with crystalline melting on a temperature side higher than the baseline shift are observed when 10 mg of the polyester composition scraped off from the B layer is heated to 290°C at a rate of 20°C/min, then held at the same temperature for 3 minutes, rapidly cooled at a rate of 200°C/min, and then heated again to 290°C at a rate of 10°C/min using a DSC-60 type differential scanning calorimeter.

As the polyester constituting the B layer, a homopolyester or a copolyester can be used. The polyester is preferably a polyester having a melting point of more than 250°C and 260°C or less, and homopolyethylene terephthalate is particularly preferable. Here, homopolyethylene terephthalate does not exclude that a diethylene glycol component, which is unavoidably contained, is contained.

The content of the crystalline polyester in the B layer is preferably 60% by mass or more, more preferably 70% by mass or more, still more preferably 80% by mass or more, still more preferably 90% by mass or more in 100% by mass of the B layer.

In order that the paint substitute film of the present invention secures sufficient melt wetting with the metal during lamination by heat fusion, while maintaining favorable forming during cold press forming, the melting point TmB of the B layer is preferably higher than the melting point TmA of the A layer and the melting point difference: TmB - TmA is preferably 25°C or more and 35°C or less. As the melting point difference is 25°C or more, sufficient melt wetting with the metal can be secured in a case where the temperature during lamination of the paint substitute film and the metal plate is low as well. Meanwhile, as the melting point difference is 35°C or less, the refractive indexes of the A layer and the B layer can be controlled within predetermined ranges and the influence of shear heat during cold press forming as well can be suppressed for uniform forming, and this contributes to the improvement in adhesive properties to a metal plate and formability.

The intrinsic viscosity (namely, IV) of the polyester used in the A layer and the B layer is preferably 0.60 or more and less than **0.95.** When the intrinsic viscosity is equal to or more than the lower limit, the film production operability is favorable and the generation of thermal degradation products derived from low molecular weight substances can be suppressed. This is preferable since it is possible to prevent internal stress generated during cold press forming of metal from remaining excessively in the laminated film, and to exert excellent adhesive strength to various kinds of metals and excellent formability. Meanwhile, when the intrinsic viscosity is equal to or less than the upper limit, the adhesive properties are favorable and the lamination processability with a metal plate is improved.

The plane orientation coefficient of the B layer in the present invention is preferably 0.165 or more, more preferably 0.166 or more, still more preferably 0.167 or more, still more preferably 0.168 or more, still more preferably 0.170 or more. As the plane orientation coefficient of the B layer is 0.165 or more, internal stress generated during cold press forming of metal can be prevented from remaining excessively in the laminated film. The plane orientation coefficient of the B layer is preferably 0.180 or less, more preferably 0.178 or less. The plane orientation coefficient of the A layer is preferably smaller than the plane orientation coefficient of the B layer, and the difference between the plane orientation coefficient of the B layer and the plane orientation coefficient of the A layer is preferably 0.030 or more.

In the paint substitute film of the present invention, the stress at 20% elongation in a tensile test at 100°C: F20 value is preferably 60 MPa or more in both the flow direction and width direction of the laminated film including the A layer and the B layer. The F20 value is more preferably 65 MPa or more, still more preferably 70 MPa or more. As the F20 value is 60 MPa or more, it is possible to maintain the stress of the paint substitute film and to secure uniform formability when heating is performed by shear heat that is generated during cold press forming of metal as well. The upper limit of the F20 value is not particularly limited, but is preferably 110 MPa or less, more preferably 105 MPa or less.

In the paint substitute film of the present invention, the residual rate (namely, residual index rate) of internal stress expressed by the following Equation 1 in a tensile test at 100°C is preferably 25% or less in both the flow direction and width direction of the laminated film including the A layer and the B layer.

$$\text{Residual rate of internal stress (\%)} = |1 - (Ub/Ua)| \times 100 \qquad \text{(Equation 1)}$$

Here, the tensile test is performed by a method in which a 15 mm wide test piece used as a sample is pulled at a chuck distance of 50 mm and a tensile speed of 1000 mm/min to 20% elongation and returned to a chuck distance of 50 mm at a speed of 2000 mm/min after 20% elongation, and the Ua refers to the elastic strain energy from the starting point 0 to the yield point in the stress-strain curve obtained from the tensile test, and the Ub refers to the elastic strain energy when the test piece is returned from 20% elongation to the chuck distance in the stress-strain curve obtained from the tensile test.

In other words, when a tensile test (specifically, a tensile test performed by a method in which a 15 mm wide test piece that is cut out from the laminated film is held between a pair of chucks with a chuck distance of 50 mm, the chuck distance is increased until 20% strain is generated at a tensile speed of 1000 mm/min and 100°C, and then the chuck distance is returned to 50 mm at a speed of 2000 mm/min and 100°C) is performed on the laminated film, the residual index rate of internal stress expressed by Equation 1 is 25% or less in both the flow direction and width direction of the laminated film.

Ua is a value determined by integrating the stress-strain curve obtained from the tensile test from 0% strain to the yield strain (that is, the strain indicating the yield point). In other words, Ua is the area of the region between the stress-strain curve and the portion of the horizontal axis from 0% strain to the yield strain.

Ub is a value determined by integrating the stress-strain curve from 20% strain to the strain at which the stress is 0 MPa (that is, the "return strain"), that is, the area of the region between the stress-strain curve and the portion of the horizontal axis from 20% strain to the return strain.

Considering that heat is generated by shear when the laminated metal plate is press-formed, the above-mentioned tensile test for determining Ua and Ub is a 100°C tensile test.

The residual index rate of internal stress, that is, the residual rate, may be 23% or less, 20% or less, or 17% or less in both the flow direction and width direction of the laminated film.

In the flow direction of the laminated film, Ub may be larger or smaller than Ua.

In the width direction of the laminated film, Ub may be larger or smaller than Ua.

In both the flow direction and width direction of the laminated film, Ub may be larger or smaller than **Ua.**

When cold pressing is performed on a metal plate on which the paint substitute film is laminated, when a load is applied until a certain deformation amount is attained and then the load is removed, a springback phenomenon occurs in which the metal plate tries to return to its original shape along the slope of the elastic deformation region in the stress-strain curve. At this time, when the residual rate of internal stress of the paint substitute film is high, the film cannot follow the springback, and tearing and peeling off of the film may occur. As the residual rate of internal stress of the paint substitute film is 25% or less, it is possible to prevent internal stress generated during cold pressing from remaining excessively in the laminated film, and it is thus presumed that excellent adhesive strength to various kinds of metals and excellent formability can be exerted. The residual rate of internal stress can be in the above range by controlling the intrinsic viscosity and plane orientation coefficient of the A layer and B layer in predetermined ranges.

In the paint substitute film of the present invention, the sum of the heat shrinkage rate in the flow direction and the heat shrinkage rate in the width direction of the laminated film including the A layer and the B layer after a heat treatment at 150°C for 15 minutes is 5.0% or less. When the sum of the heat shrinkage rates exceeds 5.0%, the adhesive strength during thermal lamination is low, a high lamination temperature close to or more than the melting point is required, and this is not preferable for practical use and is not preferable from the viewpoint of dimensional stability during thermoforming. The sum of the heat shrinkage rates is preferably 4.8% or less. The sum of the heat shrinkage rates may be, for example, 4.5% or less, 4.2% or less, or 4.0% or less. Examples of the method for achieving the heat shrinkage rate include a method in which the stretching conditions and heat setting treatment conditions are appropriately set. The sum of the heat shrinkage rate in the flow direction and the heat shrinkage rate in the width direction may be 1.0% or more, 2.0% or more, or 3.0% or more.

The heat shrinkage rate can be determined by the following equation.

$$\text{Heat shrinkage rate (\%)} = \{(L_0 - L)/L_0\} \times 100$$

Here, L is the gauge length after a heat treatment (specifically, heat treatment at 150°C for 15 minutes) and $L_0$ is the gauge length before heat treatment (specifically, heat treatment at 150°C for 15 minutes).

In the paint substitute film of the present invention, the peel strength when the A layer and a metal substrate are laminated at 230°C is preferably 10.0 N/20 mm or more. In other words, the peel strength is preferably 10.0 N/20 mm or more when the paint substitute film is laminated on a metal substrate at 230°C so that the A layer is in contact with the metal substrate and then peeled off from the metal substrate at a tensile speed of 50 mm/min and 180°. As the peel strength is 10.0 N/20 mm or more, adhesive properties and formability during cold press forming can be maintained. The peel strength is more preferably 13.0 N/20 mm or more, still more preferably 15.0 N/20 mm or more. The upper limit is not particularly limited, but is preferably 35.0 N/20 mm or less, more preferably 30.0 N/20 mm or less, still more preferably 25.0 N/20 mm or less.

The thickness of the laminated film of the present invention can be appropriately changed if necessary, but the total thickness is suitably in the range of 15 to 200 $\mu$m, and among these, is preferably in the range of 20 to 150 $\mu$m, particularly in the range of 30 to 100 $\mu$m. As the thickness is 15 $\mu$m or more, handling properties during film formation, functional layer lamination, and lamination step are favorable. As the thickness is 200 $\mu$m or less, it is possible to suppress that the load during forming becomes too large.

The thickness of the A layer is preferably 5 $\mu$m or more, more preferably 8 $\mu$m or more. As the A layer is 5 $\mu$m or

more, melt wetting is sufficiently secured during lamination with a steel plate, and adhesion properties between the film and the metal plate are likely to be exerted. Furthermore, the thickness ratio between the A layer and the B layer (XB/XA: where XA is the total thickness of the A layer and XB is the total thickness of the B layer) is preferably 1.5 or more, more preferably 2.0 or more from the viewpoint of balance between improvement in adhesion properties between the film and the metal plate and maintenance of excellent appearance.

The ratio of the thickness of the B layer to the thickness of the laminated film, namely, the thickness of the B layer/the thickness of the laminated film, is preferably 0.50 or more, more preferably 0.60 or more, still more preferably 0.65 or more, still more preferably 0.70 or more. Meanwhile, this ratio is preferably 0.95 or less, more preferably 0.90 or less.

Other additives, for example, a coloring pigment (namely, coloring agent), a fluorescent whitening agent, an antioxidant, a heat stabilizer, an ultraviolet absorber, and an anti-static agent may be added to the A layer and the B layer, if necessary, in a range in which the object of the present invention is not inhibited. In a case where the laminated film is used as a metal concealing layer, it is preferable to add a coloring pigment, and the coloring pigment may be either an inorganic pigment or an organic pigment and is preferably an inorganic pigment. Preferred examples of the inorganic pigment include alumina, titanium dioxide, calcium carbonate, and barium sulfate, and among these, titanium dioxide is more preferable. The content of the coloring pigment is preferably more than 2% by mass and 50% by mass or less based on the mass of the B layer, a more preferred content is 5% to 40% by mass, and the content is still more preferably in the range of 10% to 35% by mass. In the case of improving particularly whiteness, a fluorescent whitening agent may be used. In order to improve the handling properties in the film formation step and the forming step, inactive particles may be added. The inactive particles to be contained are not particularly limited as long as they can exist stably in the polymer, any known inactive particles can be adopted, and for example, it is preferable to use either organic inactive particles such as a polymer or copolymer of each monomer selected from polystyrene, polyacrylic acid methyl ester, polyacrylic acid ethyl ester, polymethacrylic acid methyl ester, polymethacrylic acid ethyl ester, or divinylbenzene, polytetrafluoroethylene, polyacrylonitrile, benzoguanamine, and silicone; or inorganic inactive particles such as silica, kaolin, talc, and graphite. The preferred particle size of these inactive particles is 0.1 to 10 $\mu$m. The B layer may contain inactive particles, the A layer may contain inactive particles, or both the B layer and the A layer may contain inactive particles. The content of the inactive particles in the laminated film is preferably in the range of 0.002% to 0.5% by mass in 100% by mass of the laminated film. In a case where the B layer contains inactive particles, the content of the inactive particles is preferably in the range of 0.002% to 0.5% by mass in 100% by mass of the B layer. Meanwhile, in a case where the A layer contains inactive particles, the content of the inactive particles is preferably in the range of 0.002% to 0.5% by mass in 100% by mass of the A layer.

In a case where the laminated film contains a coloring pigment, namely, a coloring agent, the A layer may contain a coloring agent, the B layer may contain a coloring agent, or both the A layer and the B layer may contain a coloring agent.

Of course, the laminated film is not restricted to contain a coloring agent. In other words, neither the A layer nor the B layer can contain a coloring agent.

The method for producing the A layer and B layer in the present invention is not particularly limited, and a conventionally known film formation method can be applied. As an example, in a case of producing a laminated film that is biaxially oriented, an un-stretched laminate sheet may first be prepared and then stretched in two directions. Representative examples are described below.

For example, a polyester composition in which inactive particles are added to polyester is prepared for the A layer, thoroughly dried, and then melted in an extruder at a temperature of the melting point to (melting point + 50) °C. The melting point here is the melting point of the polyester used. At the same time, a polyester composition in which inactive particles are added to polyester is prepared for the B layer, thoroughly dried, then supplied into another extruder, and melted at a temperature of the melting point to (melting point + 50) °C. Subsequently, by a method in which both the molten resins are laminated inside the die, for example, by a simultaneous lamination extrusion method using a multi-manifold die, a laminated un-stretched laminate sheet is produced. According to the simultaneous lamination extrusion method, a molten resin forming one layer and a molten resin forming another layer are laminated inside a die and formed into a sheet by the die in a state of maintaining the laminated form.

Next, the un-stretched laminate sheet is sequentially or simultaneously biaxially stretched and heat set, whereby a laminated film can be produced. In a case where the film is formed by sequential biaxial stretching, the un-stretched laminate sheet is first stretched in the flow direction by performing heating such as roll heating or infrared heating, and then laterally stretched using a tenter. At this time, the lower limit of the stretching temperature in the flow direction is preferably 70°C, more preferably 80°C. When the lower limit of the stretching temperature is less than 70°C, not only breaking is likely to occur but also orientation in the flow direction is strengthened by the stretching at a low temperature, thus shrinkage stress during the heat setting treatment increases, this increases strain of the molecular orientation in the width direction, and as a result, processability during forming may decrease. The upper limit of the stretching temperature in the flow direction is preferably 110°C, more preferably 100°C. When the upper limit of the stretching temperature exceeds 110°C, the orientation decreases, and thus processability during forming may decrease.

The lower limit of the stretching ratio in the flow direction is preferably 3 times, particularly preferably 3.5 times. When the stretching ratio in the flow direction is less than the above lower limit, the orientation decreases and thus processability during forming may decrease as well as slackening of the film roll may be caused by thickness unevenness. The upper limit of the stretching ratio in the flow direction is preferably 5.0 times, more preferably 4.5 times, particularly preferably 4.0 times. When the stretching ratio in the flow direction exceeds the above upper limit, the effect of improving the mechanical strength and thickness unevenness may be saturated. With regard to the stretching in the flow direction, for example, the un-stretched film can be heated by a heating roll or infrared radiation heat and stretched by the speed difference between rolls using a roll stretching machine.

The lower limit of the stretching temperature in the width direction is preferably 90°C. When the stretching temperature is less than the above lower limit, breaking may be likely to occur. The upper limit of the TD stretching temperature is preferably 130°C. When the TD stretching temperature exceeds the above upper limit, the orientation decreases and thus processability during forming may decrease.

The lower limit of the stretching ratio in the width direction is preferably 3.0 times, more preferably 3.5 times. When the stretching ratio in the width direction is less than the above lower limit, the degree of orientation in the width direction is small and thus processability during forming may decrease as well as slackening of the film roll may be caused by thickness unevenness. The upper limit of the stretching ratio in the width direction is preferably 5.0 times, more preferably 4.5 times. When the stretching ratio in the width direction exceeds the above upper limit, the effect of improving the processability during forming and thickness unevenness may be saturated.

After the biaxial stretching, it is preferable to perform a heat setting treatment. The temperature for heat setting is preferably in the range of 150°C to 230°C and is selected according to the melting point of the polyester to adjust the film quality. At this time, when the temperature for heat setting is low, the adhesive properties to metal deteriorate. When the temperature for heat setting is high, the plane orientation coefficient decreases, the function of suppressing elastic strain energy cannot be exerted, and this leads to deterioration of the adhesive properties to metal and formability. In consideration of this, the temperature for heat setting is preferably 205°C or more, more preferably 210°C or more, still more preferably 215°C or more.

It is preferable to perform a heat relaxation treatment with the heat setting treatment or separately from the heat setting treatment. In the heat relaxation treatment, it is preferable to perform relaxation in at least one of the flow direction (namely, MD direction) or the width direction (namely, TD direction). Among these, it is preferable to perform relaxation in the width direction. In a case where relaxation in the width direction is performed, the relaxation rate in the width direction is preferably 3% or more, more preferably 4% or more. When the relaxation rate in the width direction is 3% or more, the heat shrinkage rate can be effectively decreased. Meanwhile, the relaxation rate in the width direction is preferably 8% or less, more preferably 7% or less.

One of the preferred aspects of the present invention is a paint substitute film, in which an easy-adhesion layer is laminated on the surface on the B layer side of a laminated film including at least two layers of an A layer and a B layer. The easy-adhesion layer has a function of improving the adhesion properties of the laminated film with a surface protective layer and a colored layer to be described later. The easy-adhesion layer preferably contains a resin having at least one functional group selected from the group consisting of an epoxy group, an oxazoline group, a silanol group, and an isocyanate group. Among these, it is preferable to contain an epoxy group or an oxazoline group from the viewpoint of obtaining excellent adhesion properties with the B layer and excellent image clarity (see Patent Document 2, that is, JP-A-2020-192787). From the viewpoint of adhesion properties, the thickness of the easy-adhesion layer is preferably 10 nm or more, more preferably 15 nm or more, still more preferably 20 nm, particularly preferably 40 nm or more. Meanwhile, the upper limit of the thickness is preferably 200 nm or less, more preferably 180 nm, still more preferably 150 nm, particularly preferably 120 nm or less from the viewpoint of reducing thickness unevenness in coating and of adhesion properties.

As described above, the easy-adhesion layer preferably contains at least one functional group selected from the group consisting of at least an epoxy group, an oxazoline group, a silanol group, and an isocyanate group. As the resin constituting the easy-adhesion layer itself, any known resin can be adopted as long as it is excellent in adhesion properties with the laminated film and the functional layer. For adjustment of the adhesive strength, it is possible to suitably subject each resin to copolymerization or blend different resins to improve the adhesive strength. For example, arbitrary resins selected from among a polyurethane-based resin, a vinyl chloride/vinyl acetate-based copolymer resin, a vinyl chloride/vinyl acetate/acrylic copolymer resin, a chlorinated polypropylene-based resin, an acrylic resin, a polyester-based resin, a polyamide-based resin, a butyral-based resin, a polystyrene-based resin, a nitrocellulose-based resin, and a cellulose acetate-based resin may be used singly or in mixture of two or more kinds thereof. In the forming by cold pressing in the present invention, since the forming temperature is preferably about 150°C, it is preferable to design the forming to be in a state where the glass transition temperature is lower than this temperature, and an acrylic resin and a polyester-based resin can be preferably used.

The easy-adhesion layer may be provided by in-line coating in which coating is performed during the film formation of the laminated film, or the laminated film may be formed, then once wound in a roll, and then unwound again to perform off-line coating.

The easy-adhesion layer thus obtained contributes to the improvement in adhesion properties between the laminated film and each layer by the effects of bond formation between functional groups, reduction of interfacial energy between layers, and interfacial mixing between layers when a surface protective layer and/or a colored layer to be described later are laminated.

Another preferred aspect of the present invention is a paint substitute film including at least one functional layer selected from the group consisting of a surface protective layer and a colored layer on the surface on the B layer side of a laminated film including at least two layers of an A layer and a B layer via an easy-adhesion layer.

Still another preferred aspect of the present invention is a paint substitute film in which a colored layer and a surface protective layer are laminated on the surface on the B layer side of a laminated film including at least two layers of an A layer and a B layer in this order via an easy-adhesion layer. It is preferable that the respective layers are laminated in this order since adhesion properties of the laminated film with the functional layers become favorable, and further, excellent appearance design can be exerted.

The colored layer preferably contains a binder resin and at least one coloring agent selected from the group consisting of a pigment and a dye, and the coloring agent is preferably contained at 0.5% by mass or more and less than 40% by mass based on the mass of the composition used for the colored layer from the viewpoint of design. A more preferred range is 2% by mass or more and less than 30% by mass, and a particularly preferred range is 5% by mass or more and less than 25% by mass. In a case where a binder resin is not used, cracking easily occurs in the colored layer by elongation during forming, and as a result, the beautiful appearance may be impaired. As a pigment or a dye is used, an appearance excellent in beauty can be formed. The pigment or dye used is preferably one or more selected from the group consisting of carbon black (ink), iron black, titanium white, antimony white, yellow lead, titanium yellow, red iron oxide, cadmium red, ultramarine, cobalt blue, quinacridone red, isoindolinone yellow, phthalocyanine blue, aluminum, brass, titanium dioxide, and pearlescent pigment. The use of other pigments and additives for color matching is a preferred aspect as long as it does not impair the effects of the present invention.

The method for forming the colored layer is not particularly limited, but a method in which the colored layer is laminated by coating is simple and preferable. The adhesion properties of the colored layer with the B layer can be appropriately adjusted by the kinds of the B layer and the easy-adhesion layer C, and the binder resin used in the colored layer.

The thickness of the colored layer is preferably 2 μm or more, more preferably 5 μm or more, still more preferably 10 μm or more. The upper limit of the thickness is preferably 100 μm or less, more preferably 75 μm or less, still more preferably 50 μm or less, still more preferably 45 μm or less, still more preferably 30 μm or less. The colored layer may be multi-layered to exert a beautiful design when used for the exterior of a vehicle. For example, it is preferable to provide a two-layer colored layer by providing a colored layer in which a glittering pigment is contained in a binder resin on a colored layer containing a pigment. Taking into consideration the reflection characteristics from the visually recognized side, it is also preferable to provide a three-layer colored layer consisting of a colored reflective layer containing an aluminum pigment, a colored pigment layer, and a glittering pigment layer of a clear coating film on the side of the colored layer closest to the laminated film. In order to impart desired design, the use of a single colored layer or multiple colored layers does not in any way negate the object of the present invention.

The resin used in the surface protective layer preferably consists mainly of at least one kind of resin selected from the group consisting of a thermosetting resin and a photocurable resin from the suitability to the production process from production of the paint substitute film to forming of the metal member. In other words, the surface protective layer preferably exhibits thermosetting or photosetting properties. Among these, thermosetting properties are preferable. The surface protective layer is required to have functions of weather resistance, scratch resistance, and transparency, and as an example, an acrylic resin can be used.

The thickness of the surface protective layer is preferably set so that the film thickness after drying is 5 to 80 μm. As the thickness of the surface protective layer is equal to or more than the above lower limit, the amount of resin material used is small and this is excellent in terms of economic efficiency, but it is not possible to maintain the performance of protecting the inner colored layer and the laminated film and the obtained member against scratches and chemicals at a high level. Meanwhile, as the thickness is equal to or less than the upper limit, the surface protective layer is excellent from the viewpoints of development of gloss and protective performance as a hard coat film, but a larger amount of resin than necessary is used and this is not excellent in terms of economic efficiency. With regard to the preferred thickness of the surface protective layer, the lower limit is 10 μm, more preferably 15 μm and the upper limit is 60 μm, more preferably 50 μm.

The surface protective layer may be constituted of a single layer or multiple layers. For example, by changing the drying conditions when coating is performed two times using the same resin to form multiple layers, the degree of curing can be adjusted and adhesion properties are improved when a functional layer such as an anti-fouling layer is provided further on the outer side of the surface protective layer. By forming multiple layers within the above range, a glossy surface can be developed.

The surface protective layer is preferably laminated on the easy-adhesion layer or the colored layer by coating. This may be done by any known coating method, but it is preferable to wind the laminated film in a roll in an incompletely heat-cured state (hereinafter sometimes referred to as a "semi-cured state"). When the hard coat coating material is dried, the primary reaction proceeds by heat, the hard coat becomes a coating film in a semi-cured state, and the laminated film can be wound. As the surface protective layer in a semi-cured state is designed so that the secondary reaction, that is, the reaction at a temperature higher than the drying temperature mentioned above proceeds after that, the degree of effect can be progressed from the semi-cured state to the cured state by the heat applied during lamination on a metal plate and forming of a member.

As a preferred aspect of the present invention, in the paint substitute film, further lamination may be performed on the surface of the functional layer consisting of the colored layer and/or the surface protective layer, if necessary. Examples thereof include lamination of an anti-fouling layer to prevent contamination during outdoor use and a protective film to improve handling properties during the production process. In particular, when the surface protective layer is laminated in a semi-cured state, it is preferable to laminate a protective film in order to improve handling properties in the subsequent steps. The protective film may be peeled off at any time, but is preferably peeled off after thermocompression lamination with the metal plate and cold press forming of the film-covered metal laminated body from the viewpoint of scratch resistance. Examples of the kind of protective film include films constituted of a polyethylene resin, a polyester resin, a copolyester resin, a polypropylene resin, a polyvinyl chloride resin, and mixtures thereof, but a polyethylene resin, a polyvinyl chloride resin, and a copolyester resin are preferable from the viewpoint of formability. The thickness of the protective film is not particularly limited, but in order to fully exert the protective function, a thickness of 15 to 150 $\mu$m **is** preferable.

The present invention further provides a film-covered metal laminated body in which a metal plate is laminated on the paint substitute film. In the film-covered metal laminated body of the present invention, the metal plate and the A layer side of the laminated film may be laminated by thermocompression bonding, and an adhesive may not be used especially for lamination. A metal plate is usually wound in a roll, and the paint substitute film can also be made into a roll product, so roll-to-roll lamination is possible when these are used.

As a preferred method for producing the film-covered metal laminated body, for example, a metal plate may be heated and the A layer side of the supplied paint substitute film may be pressure-bonded to the metal plate using a nip roll to bond the paint substitute film to the metal plate. In other words, a heated metal plate and the paint substitute film can be pressure-bonded to obtain a laminated body. At that time, as the temperature T of the metal plate during the thermocompression bonding is set to be equal to or more than the melting point TmA of the A layer of the laminated film and equal to or less than the melting point TmB of the B layer of the laminated film, it is possible to suppress melting of the B layer while securing the melt wetting between the metal plate and the A layer, and thus to attain excellent adhesive properties to the metal plate and excellent processing formability. A portion of the thermocompression-bonded paint substitute film is in a molten state by the heat from the metal plate, but this solidifies in the course of cooling and recrystallizes, and the subsequent forming processability decreases. In order to prevent this, it is preferable to rapidly cool the film-covered metal laminated body after thermocompression bonding. The method of rapid cooling is not particularly limited, and known methods such as immersion in a cold water bath and spraying of cold water can be utilized. The time from thermocompression bonding to rapid cooling is preferably as short as possible, and is preferably 5 seconds or less, still more preferably 3 seconds or less, particularly preferably 1 second or less.

The metal plate used in thermocompression bonding can be appropriately selected from among known metal plates depending on the intended use of the metal member, and examples thereof include steel plate, zinc-plated steel plate, tin-free steel (chrome-plated steel plate), tin plate, aluminum plate, and stainless steel plate, but are not limited thereto. Generally, metal plates, which exhibit favorable formability and have a thickness of about 0.3 to 1.0 mm, are used, so it is preferable to use a metal plate in such a grade. For example, when the metal plate is used for the exterior of a vehicle, a preferred aspect is a steel plate, which has a thickness of 0.4 to 0.8 mm and has been subjected to zinc alloy plating as an antirust treatment, or an aluminum plate having a thickness of 0.6 to 1.2 mm.

The present invention further provides a metal member, that is, a processed article, formed by press-forming the film-covered metal laminated body. As the method of press forming, cold press forming is preferable. When cold press forming is performed on the above-described film-covered metal laminated body, in the case of stretch forming in which the end of the metal plate is held at a high pressure or in the case of forming (drawing) in which the metal plate is held at a low pressure and sucked by forming, it is possible to cover the surface of the metal member with the paint substitute film as the paint substitute film is previously thermocompression-bonded to the surface of the metal plate as described above.

The metal member is preferably used for vehicle exterior components of vehicles such as motor vehicles and motorcycles. Excellent appearance design is required for vehicle exterior components, and the present invention can be suitably used therefor. The vehicle exterior component is preferably an outer plate panel. The present invention is not limited to this, and may be used for ships (motorboats and the like), home appliances, audio products, construction materials, steel plate products, and the like.

EXAMPLES

Hereinafter, the present invention will be described in detail with reference to Examples, but the present invention is not limited only to these Examples. Each property value is measured by the following method. Parts and % in Examples mean parts by mass and % by mass, respectively, unless otherwise stated.

(A) Method for measuring intrinsic viscosity

In 50 ml of a mixed solvent of phenol/1,1,2,2-tetrachloroethane (60/40 (mass ratio)), 0.2 g of polyester resin was dissolved, and the intrinsic viscosity thereof was measured at 30°C using an Ostwald viscometer. The unit is dl/g.

(B) Method for measuring melting point (Tm)

The measurement was performed using a DSC-60 type differential scanning calorimeter (manufactured by Shimadzu Corporation). The polyester resin was heated and melted at 300°C for 5 minutes and then rapidly cooled with liquid nitrogen. As a sample, 10 mg of the polyester resin rapidly cooled was used, and the endothermic peak temperature (melting point) of the sample based on crystalline melting, which appeared when the temperature was increased at a rate of 20°C/min, was measured. The melting points of the A and B layers of the polyester film were measured in the same manner as above using samples scraped off from the respective surfaces of the A and B layers of the polyester film. Here, the melting point peak was defined as an endothermic peak of 0.05 J/g or more associated with crystalline melting on the higher temperature side than the baseline shift corresponding to the glass transition point.

(C) Thickness of each layer of polyester film

The polyester film was cut into a piece 2 mm long in the flow direction and 2 cm wide in the width direction, fixed in an embedding capsule, and then embedded in an epoxy resin. The embedded sample was then cut perpendicularly in the width direction using a microtome (Supercut manufactured by Reichert-Jung) to obtain a thin **slice having a thickness of 50 μm.** This thin slice was observed and photographed at an acceleration voltage of 20 kV using a scanning electron microscope (4300SE/N manufactured by Hitachi High-Tech Corporation), the thickness of each layer was measured from the photograph, and the average thickness at five points was determined.

(D) Plane orientation coefficient

In accordance with the JIS K 7142-1996 A method, the refractive index (Nx) in the flow direction of the polyester film, the refractive index (Ny) in the width direction, and the refractive index (Nz) in the thickness direction were measured using sodium D-ray as a light source and Abbe refractometer, and the plane orientation coefficient $\Delta P$ was calculated by the calculation formula of the following Equation 2.

Plane orientation coefficient $\Delta P = (Nx + Ny)/2 - Nz$                    Equation 2

(E) Heat shrinkage rate

Test pieces measuring 10 mm in width and 150 mm in length were cut out at five points in each of the flow direction and width direction of the polyester film. Each test piece was marked with marked lines having an interval of 100 mm $\pm$ 2 mm, centered on the center of the test piece. The interval between the marked lines on the test piece before heating was measured at an accuracy of 0.1 mm. The test piece was hung without load in a hot air dryer (PHH-202, manufactured by ESPEC CORP.) and subjected to heat treatment under heating conditions of 150°C and 15 minutes. After the test piece was taken out from the thermostatic chamber and cooled to room temperature, the length and width were measured at the same locations as those in the first measurement. The heat shrinkage rate, namely, dimensional change rate of each test piece was calculated as the percentage of the dimensional change in each of the flow direction and the width direction with respect to the initial value. The average of the measured values in each direction was taken as the dimensional change rate in that direction.

In other words, the heat shrinkage rate in each direction was determined by the following equation.

$$\text{Heat shrinkage rate (\%)} = \{(L_0 - L)/L_0\} \times 100$$

Here, L is the gauge length after a heat treatment (that is, the distance between a pair of marked lines) and $L_0$ is the gauge length before heat treatment. As described above, the average values of five test pieces were substituted for L and $L_0$.

(F) Elastic strain energy

In conformity with JIS K 7127, a test sample 15 mm in width and 100 mm in length was cut out in each of the flow direction and width direction of the polyester film. The tensile test was performed under a condition in which the test sample was pulled at a chuck distance of 50 mm and a tensile speed of 1000 mm/min to 20% elongation and returned to a chuck distance of 50 mm at a speed of 2000 mm/min after 20% elongation using a tensile testing machine (Autograph AG-I manufactured by Shimadzu Corporation). The tensile test was performed using a thermostatic chamber at 100°C. From the obtained stress-strain curve, the stress at 20% elongation: F20 value of the test sample was calculated, and the elastic strain energy Ua from the test starting point 0 to the yield point and the elastic strain energy Ub from 20% elongation to the return strain into the chuck distance of 50 mm were calculated by the calculation formulas of Equations 3 and 4.
(Equation 3)

[Math 1]

$$\text{Ua} = \int_0^a P \, d\lambda$$

(Equation 4)

[Math 2]

$$\text{Ub} = \int_b^{20} P \, d\lambda$$

Here, as illustrated in Fig. 1, a refers to the amount of strain (%) at the yield point, and P1 refers to the stress (MPa) at the yield point. b refers to the amount of strain (%) at which the stress is 0 MPa after 20% elongation, that is, the amount of return strain (%). In other words, b refers to the amount of strain (%) at which the stress is 0 MPa when the chuck distance returns to 50 mm. P2 refers to the stress (MPa) at 20% elongation. P refers to stress. $\lambda$ refers to the amount of strain (%).

The initial stress at which the increase in stress per 0.3% increase in the amount of strain was 0.010 MPa or less in the stress-strain curve was determined as the yield point. Specifically, first, in the stress-strain curve, the stress was read every time the strain increased by 0.3%, starting from 1.0% strain. In other words, the stress was determined at each of strains of 1.0%, 1.3%, 1.0%, 1.9%, 2.2%, 2.5%, 2.8%, 3.1%. ·······. Then, the initial stress at which the increase in stress per 0.3% increase in strain was 0.010 MPa or less was determined as the yield point.

(G) Appearance evaluation of laminate of film and metal plate (lamination evaluation)

The A layer side of a polyester film was thermocompression-bonded to a zinc alloy-plated steel plate having a thickness of 0.6 mm at 260°C, and the appearance was visually evaluated according to the following criteria. Judgement A: Generation of wrinkles or generation of bubbles is not clearly recognized
Judgement C: Generation of at least either of wrinkles or bubbles is clearly recognized

(H) Peel strength between film and metal plate

When the A layer side of a polyester film was thermocompression-bonded to an aluminum metal plate having a thickness of 0.9 mm at 230°C, heat resistant paper was sandwiched between these to create a peeling edge. The obtained film-covered metal laminated body with peeling edge was cut into a size of 20 mm in width and 150 mm in length, one chuck held the aluminum metal plate and the other chuck held the peeling edge of the film, a tensile test was performed three times in a 180° direction using a tensile tester, and the average value of the maximum loads at that time was taken as the peel strength. The chuck distance was set to 50 mm and the tensile speed was set to 50 mm/min.

(I) Evaluation of adhesive properties after cold press forming

The A layer side of a polyester film was thermocompression-bonded to a zinc alloy-plated steel plate having a thickness of 0.6 mm, and the obtained film-covered metal laminated body was cut into a size of 180 mm in width and 180 mm in length, and subjected to cold press forming in this state. Using a die with a drawing ratio of 1.3, the periphery of the steel plate was held with a load of 15 t, and the center of the steel plate was pressed at room temperature with a load of 100 t to perform drawing. A cross mark cut was made in the center of the obtained metal formed article (namely, the drawn film-covered metal laminated body). Specifically, an X-shaped cut, reaching not only the polyester film but also the steel plate (specifically, zinc alloy-plated steel plate), was made using a cutter knife. Then, the metal formed article was treated in a retorting machine at 120°C and 0.2 MPa for 2 hours. The adhesive strength of the attached portion of the film attached to this formed article was judged as follows.

Judgement A: Not peeled off
Judgement B: Partly peeled off (whitening is observed partly)
Judgement C: Peeled off (whitening is observed throughout)

In Examples and Comparative Examples, the following resins were used as the resin constituting the B layer of the laminated film.

(Resin composition A)

As the resin composition A, a mixture of the following resins B and C was used.

Resin B: PET resin, IV = 0.75 dl/g, melting point 255°C 97.0 parts by mass
Resin C: PET resin containing silica particles (average particle size 1.7 $\mu$m) at 0.036% by mass in 100% by mass of resin, IV = 0.75 dl/g, melting point 255°C 3.0 parts by mass

(Resin composition D)

As the resin composition D, a mixture of the following resins E and F was used.

Resin E: PET resin, IV = 0.62 dl/g, melting point 255°C 90.0 parts by mass
Resin F: PET resin containing silica particles (average particle size 2.7 $\mu$m) at 0.72% by mass in 100% by mass of resin, IV = 0.62 dl/g, melting point 255°C 10.0 parts by mass

(Resin composition G)

PET resin, IV = 0.69 dl/g, melting point 225°C 100.0 parts by mass

(Resin composition H)

As the resin composition H, a mixture of the following resins I and J was used.

Resin I: Copolyester resin containing ethylene terephthalate unit at 89.2 mol% and ethylene isophthalate unit at 10.8 mol%, IV = 0.71 dl/g, melting point 225°C 55.0 parts by mass
Resin J: PBT resin, IV = 0.67 dl/g, melting point 225°C 45.0 parts by mass

In Examples and Comparative Examples, the following resins were used as the resin constituting the A layer of the laminated film.

(Resin K)
Copolyester resin containing ethylene terephthalate unit at 89.2 mol% and ethylene isophthalate unit at 10.8 mol%, IV = 0.63 dl/g, melting point 225°C
(Resin L)
Copolyester resin containing ethylene terephthalate unit at 86.0 mol% and ethylene isophthalate unit at 14.0 mol%, IV = 0.70 dl/g, melting point 217°C
(Resin M)
Copolyester resin containing ethylene terephthalate unit at 80.0 mol% and ethylene isophthalate unit at 20.0 mol%, IV = 0.63 dl/g, melting point 198°C

(Resin N)

Copolyester resin containing ethylene terephthalate unit at 92.1 mol% and ethylene isophthalate unit at 7.9 mol%, IV = 0.62 dl/g, melting point 233°C

[Example 1]

The resin composition A for the B layer and the resin K for the A layer were supplied into separate hoppers, and the A layer and the B layer were both melted at 280°C, then merged into two layers in a die, and extruded onto a cooling drum to form an un-stretched sheet. Thereafter, the un-stretched sheet was stretched 3.2 times in the flow direction at 80°C, and then stretched 3.0 times in the width direction at 130°C. The stretched sheet was heat set at 215°C and then subjected to a step for 5% relaxation in the width direction. In this manner, a polyester film was fabricated which was composed of two layers of an A layer and a B layer, with the A layer having a thickness of 10 $\mu$m and the B layer having a thickness of 40 $\mu$m, for a total thickness of 50 $\mu$m.

[Example 2]

A polyester film composed of two layers of an A layer and a B layer was fabricated in the same manner as in Example 1, except that the film was stretched 3.9 times in the flow direction and 3.5 times in the width direction.

[Example 3]

A polyester film composed of two layers of an A layer and a B layer was fabricated in the same manner as in Example 1, except that the resin composition D was used as the resin for the B layer and the film was stretched 3.5 times in the flow direction and 3.3 times in the width direction.

[Comparative Example 1]

A polyester film composed of two layers of an A layer and a B layer was fabricated in the same manner as in Example 1, except that the resin L was used as the resin for the A layer and the film was stretched 3.0 times in the flow direction and 3.5 times in the width direction.

[Comparative Example 2]

A polyester film composed of two layers of an A layer and a B layer was fabricated in the same manner as in Example 1, except that the resin composition D was used as the resin for the B layer, the film was stretched 3.5 times in the flow direction and 3.3 times in the width direction, and the heat setting temperature was set to 235°C.

[Comparative Example 3]

A polyester film composed of two layers of an A layer and a B layer was fabricated in the same manner as in Example 1, except that the resin composition D was used as the resin for the B layer, the resin L was used as the resin for the A layer, and the film was stretched 3.8 times in the flow direction and 3.3 times in the width direction.

[Comparative Example 4]

A polyester film composed of two layers of an A layer and a B layer was fabricated in the same manner as in Example 1, except that the resin composition D was used as the resin for the B layer, the resin M was used as the resin for the A layer, and the film was stretched 3.5 times in the flow direction and 3.3 times in the width direction.

[Comparative Example 5]

A polyester film composed of two layers of an A layer and a B layer was fabricated in the same manner as in Example 1, except that the resin N was used as the resin for the A layer and the film was stretched 3.0 times in the flow direction and 3.5 times in the width direction.

[Comparative Example 6]

A polyester film in which both the A layer and the B layer were composed of a single layer formed from the same raw material was fabricated in the same manner as in Example 1, except that the resin composition H was used as the resin for the B layer and the A layer, the film was stretched 3.0 times in the flow direction and 3.0 times in the width direction, and the heat setting temperature was set to 205°C.

[Comparative Example 7]

A polyester film in which both the A layer and the B layer were composed of a single layer formed from the same raw material was fabricated in the same manner as in Example 1, except that the resin composition G was used as the resin for the B layer and the A layer, the film was stretched 3.1 times in the flow direction and 3.5 times in the width direction, and the heat setting temperature was set to 180°C.

[Comparative Example 8]

A polyester film was fabricated by the method described in Example 7 of Patent Document 2 (that is, JP-A-2020-192787). The resin used in the A layer and the production conditions such as the stretching ratio are as presented in Table 1C below.

The evaluation results of the polyester films fabricated in Examples 1 to 3 and Comparative Examples 1 to 8 are presented in Table 1. The thermocompression bonding of the film to the zinc alloy-plated steel plate in the evaluation of adhesive properties after cold press forming was performed by heating the metal plate to each of the temperatures presented in Table 1.

[Table 1A]

| | | | | Example 1 | Example 2 | Example 3 |
|---|---|---|---|---|---|---|
| A layer | | Kind | - | IA11-PET | IA11-PET | IA11-PET |
| | | TmA | °C | 225 | 225 | 225 |
| | | Intrinsic viscosity | dL/g | 0.63 | 0.63 | 0.63 |
| | | Layer thickness | μm | 10 | 10 | 10 |
| B layer | | Kind | - | PET | PET | PET |
| | | TmB | °C | 255 | 255 | 255 |
| | | Intrinsic viscosity | dL/g | 0.75 | 0.75 | 0.62 |
| | | Layer thickness | μm | 40 | 40 | 40 |
| Difference in intrinsic viscosity | | | °C | 0.12 | 0.12 | -0.01 |
| TmB-TmA | | | °C | 30 | 30 | 30 |
| Stretching ratio | | MD direction | Times | 3.2 | 3.9 | 3.5 |
| | | TD direction | Times | 3 | 3.5 | 3.3 |
| Heat setting temperature | | - | °C | 215 | 215 | 215 |
| Relaxation step | | - | % | 5 | 5 | 5 |
| Plane orientation coefficient ΔP | | B layer side | - | 0.165 | 0.178 | 0.166 |
| | | A layer side | - | 0.121 | 0.129 | 0.133 |
| | | Difference | - | 0.045 | 0.049 | 0.033 |
| Heat shrinkage rate HS | | MD direction | % | 1.7 | 2.4 | 2.1 |
| | | TD direction | % | 1.4 | 2.4 | 1.6 |
| | | Sum | % | 3.1 | 4.7 | 3.7 |

(continued)

|  |  |  | Example 1 | Example 2 | Example 3 |
|---|---|---|---|---|---|
| Stress at 20% elongation F20 value | MD direction | MPa | 75 | 81 | 67 |
|  | TD direction | MPa | 80 | 103 | 74 |
|  | Average | MPa | 78 | 92 | 71 |
| Elastic strain energy Ua | MD direction | mj/cm$^2$ | 78 | 96 | 77 |
|  | TD direction | mj/cm$^2$ | 78 | 116 | 82 |
| Elastic strain energy Ub | MD direction | mj/cm$^2$ | 89 | 100 | 76 |
|  | TD direction | mj/cm$^2$ | 96 | 136 | 86 |
| Residual rate of internal stress | MD direction | % | 14% | 4% | 1% |
|  | TD direction | % | 23% | 17% | 6% |
| Lamination evaluation |  | - | A | A | A |
| Peel strength |  | N/20 mm | 21 | 15 | 15 |
| Adhesive property evaluation |  | - | A | A | A |
| Thermocompression bonding temperature during adhesive property evaluation |  | °C | 260 | 260 | 260 |

[Table 1B]

|  |  |  | Comparative Example 1 | Comparative Example 2 | Comparative Example 3 |
|---|---|---|---|---|---|
| A layer | Kind | - | IA14-PET | IA11-PET | IA14-PET |
|  | TmA | °C | 217 | 225 | 217 |
|  | Intrinsic viscosity | dL/g | 0.7 | 0.63 | 0.7 |
|  | Layer thickness | μm | 15 | 10 | 10 |
| B layer | Kind | - | PET | PET | PET |
|  | TmB | °C | 255 | 255 | 255 |
|  | Intrinsic viscosity | dL/g | 0.75 | 0.62 | 0.62 |
|  | Layer thickness | μm | 35 | 40 | 40 |
| Difference in intrinsic viscosity |  | °C | 0.05 | -0.01 | 0.08 |
| TmB-TmA |  | °C | 38 | 30 | 38 |
| Stretching ratio | MD direction | Times | 3 | 3.5 | 3.8 |
|  | TD direction | Times | 3.5 | 3.3 | 3.3 |
| Heat setting temperature | - | °C | 215 | 235 | 215 |
| Relaxation step | - | % | 5 | 5 | 5 |
| Plane orientation coefficient ΔP | B layer side | - | 0.163 | 0.114 | 0.143 |
|  | A layer side | - | 0.117 | 0.083 | 0.102 |
|  | Difference | - | 0.045 | 0.031 | 0.042 |
| Heat shrinkage rate HS | MD direction | % | 3.0 | 1.2 | 2.3 |
|  | TD direction | % | 1.5 | 0.3 | 3.2 |
|  | Sum | % | 4.6 | 1.5 | 5.5 |

(continued)

| | | | Comparative Example 1 | Comparative Example 2 | Comparative Example 3 |
|---|---|---|---|---|---|
| Stress at 20% elonga-tion F20 va-lue | MD direction | MPa | 51 | 64 | 77 |
| | TD direction | MPa | 82 | 60 | 83 |
| | Average | MPa | 67 | 62 | 80 |
| Elastic strain energy Ua | MD direction | mj/cm$^2$ | 92 | 52 | 64 |
| | TD direction | mj/cm$^2$ | 67 | 56 | 74 |
| Elastic strain energy Ub | MD direction | mj/cm$^2$ | 54 | 77 | 91 |
| | TD direction | mj/cm$^2$ | 96 | 67 | 103 |
| Residual rate of internal stress | MD direction | % | 41% | 48% | 43% |
| | TD direction | % | 43% | 20% | 40% |
| Lamination evaluation | | - | A | C | C |
| Peel strength | | N/20 mm | 22 | 12 | 29 |
| Adhesive property evaluation | | - | B | B | C |
| Thermocompression bonding temperature during adhesive property evaluation | | °C | 260 | 250 | 230 |

[Table 1C]

| | | | Comparative Example 4 | Comparative Example 5 | Comparative Example 6 | Comparative Example 7 | Comparative Example 8 |
|---|---|---|---|---|---|---|---|
| A layer | Kind | - | IA20-PET | IA8-PET | - | - | IA12-PET |
| | TmA | °C | 198 | 233 | - | - | 225 |
| | Intrinsic viscosity | dL/g | 0.63 | 0.62 | - | - | 0.65 |
| | Layer thickness | μm | 10 | 10 | - | - | 10 |
| B layer | Kind | - | PET | PET | PET/BT | PET | PET |
| | TmB | °C | 255 | 255 | 225 | 225 | 255 |
| | Intrinsic viscosity | dL/g | 0.62 | 0.75 | 0.69 | 0.69 | 0.70 |
| | Layer thickness | μm | 40 | 40 | 50 | 19 | 40 |
| Difference in intrinsic viscosity | | °C | 0.01 | 0.13 | 0.69 | 0.69 | 0.05 |
| TmB-TmA | | °C | 57 | 22 | 0 | 0 | 30 |
| Stretching ratio | MD direction | Times | 3.5 | 3 | 3 | 3.1 | 3 |
| | TD direction | Times | 3.3 | 3.5 | 3 | 3.5 | 3.5 |
| Heat setting temperature | - | °C | 215 | 215 | 205 | 180 | 200 |
| Relaxation step | - | % | 5 | 5 | 5 | 5 | 0 |

(continued)

| | | | Comparative Example 4 | Comparative Example 5 | Comparative Example 6 | Comparative Example 7 | Comparative Example 8 |
|---|---|---|---|---|---|---|---|
| Plane orientation coefficient $\Delta P$ | B layer side | - | 0.121 | 0.168 | 0.132 | 0.134 | 0.164 |
| | A layer side | - | 0.097 | 0.140 | | | 0.123 |
| | Difference | - | 0.025 | 0.028 | 0.000 | 0.000 | 0.041 |
| Heat shrinkage rate HS | MD direction | % | 3.2 | 1.2 | 2.4 | 3.6 | 3.0 |
| | TD direction | % | 4.5 | 0.8 | 0.1 | 4.2 | 2.4 |
| | Sum | % | 7.7 | 2.0 | 2.5 | 7.8 | 5.4 |
| Stress at 20% elongation F20 value | MD direction | MPa | 62 | 60 | 14 | 37 | 83 |
| | TD direction | MPa | 69 | 72 | 22 | 47 | 88 |
| | Average | MPa | 66 | 66 | 18 | 42 | 85.3 |
| Elastic strain energy Ua | MD direction | mj/cm² | 55 | 77 | 20 | 65 | 86 |
| | TD direction | mj/cm² | 55 | 80 | 14 | 59 | 86 |
| Elastic strain energy Ub | MD direction | mj/cm² | 69 | 82 | 52 | 40 | 98 |
| | TD direction | mj/cm² | 81 | 91 | 43 | 48 | 106 |
| Residual rate of internal stress | MD direction | % | 26% | 7% | 166% | 39% | 13% |
| | TD direction | % | 48% | 14% | 205% | 18% | 21% |
| Lamination evaluation | | - | C | A | A | A | C |
| Peel strength | | N/20 mm | 16 | 6 | 31 | 12 | 8 |
| Adhesive property evaluation | | - | C | C | C | C | C |
| Thermocompression bonding temperature during adhesive property evaluation | | °C | 230 | 260 | 260 | 260 | 260 |

As presented in Table 1, in the polywater films fabricated in Examples, the lamination properties to the metal plate laminate were evaluated to be favorable and the attachment of the metal formed articles was evaluated to be favorable. Meanwhile, in the polyester films fabricated in Comparative Examples, either or both the lamination properties to the metal plate and the adhesive properties of the metal formed articles were inferior, and the polyester films were not suitable as a paint substitute film. In particular, the residual index rates of internal stress in Comparative Examples 1 to 4, 6 and 7 were significantly larger than those in Examples 1 to 3, and the adhesive properties in these Comparative Examples were judged to be inferior to those in Examples 1 to 3. Meanwhile, the residual index rate of internal stress in Comparative Example 5 was a value similar to that in Example 2, but the polyester film was not firmly attached to the metal plate in thermocompression bonding at 260°C, and therefore, the peel strength was poor and the adhesive properties were judged to be inferior. Preliminary experiments have revealed that wrinkles and bubbles are generated when the polyester film of Comparative Example 5 is thermocompression-bonded to a metal plate at 280°C to firmly attach the polyester film to the metal plate. The residual index rate of internal stress in Comparative Example 8 was a value similar to that in Example 1, but the heat shrinkage was large (that is, the heat shrinkage rate was large), and wrinkles and bubbles were generated in thermocompression bonding at 260°C. Moreover, in Comparative Example 8, the peel strength was poor and the adhesive properties were judged to be inferior.

**Claims**

1. A paint substitute film comprising a laminated film including an A layer and a B layer, wherein

   the A layer contains a first crystalline polyester as a main constituent,
   the B layer contains a second crystalline polyester as a main constituent,
   a plane orientation coefficient of the B layer is 0.165 or more and 0.180 or less,
   a melting point of the B layer is higher than a melting point of the A layer and a difference between the melting point of the B layer and the melting point of the A layer is 25°C or more and 35°C or less,
   a residual index rate of internal stress is 25% or less in both a flow direction and a width direction of the laminated film when a tensile test is performed on the laminated film,

   $$\text{the residual index rate is expressed by } |1 - (Ub/Ua)| \times 100,$$

   the tensile test is performed by a method in which a 15 mm wide test piece is held between a pair of chucks with a chuck distance of 50 mm, the chuck distance is increased until 20% strain is generated at a tensile speed of 1000 mm/min and 100°C, and then the chuck distance is returned to 50 mm at a speed of 2000 mm/min and 100°C,
   the Ua is a value determined by integrating a stress-strain curve obtained from the tensile test from 0% strain to a yield strain, and
   the Ub is a value determined by integrating the stress-strain curve from 20% strain to a strain at which a stress is 0 MPa.

2. The paint substitute film according to claim 1, wherein the laminated film has a 20% strain tensile stress of 60 MPa or more and 110 MPa or less in both the flow direction and the width direction in the tensile test.

3. The paint substitute film according to claim 1, wherein the plane orientation coefficient of the B layer is larger than a plane orientation coefficient of the A layer and a difference between the plane orientation coefficient of the B layer and the plane orientation coefficient of the A layer is 0.03 or more.

4. The paint substitute film according to claim 1, wherein a sum of a heat shrinkage rate in the flow direction and a heat shrinkage rate in the width direction is 1.0% or more and 5.0% or less when the laminated film is subjected to a heat treatment at 150°C for 15 minutes.

5. The paint substitute film according to claim 1, wherein a peel strength is 10 N/20 mm or more when the paint substitute film is laminated on a metal substrate at 230°C so that the A layer is in contact with the metal substrate and then peeled off from the metal substrate at a tensile speed of 50 mm/min and 180°.

6. The paint substitute film according to claim 1, further comprising:

   an easy-adhesion layer provided on a surface of the B layer of the laminated film; and
   a functional layer, wherein
   the A layer, the B layer, the easy-adhesion layer, and the functional layer are disposed in this order, and
   the functional layer includes at least one of a colored layer or a surface protective layer.

7. The paint substitute film according to claim 6, wherein the easy-adhesion layer contains a resin having at least one functional group selected from the group consisting of an epoxy group, an oxazoline group, a silanol group, and an isocyanate group.

8. The paint substitute film according to claim 6, wherein

   the functional layer includes the colored layer and the surface protective layer, and
   the A layer, the B layer, the easy-adhesion layer, the colored layer, and the surface protective layer are disposed in this order.

9. The paint substitute film according to claim 6, wherein

   the functional layer includes the colored layer, and
   the colored layer contains a coloring agent at 0.5% by mass or more and less than 40% by mass with respect to 100% by mass of a resin composition constituting the colored layer.

10. The paint substitute film according to claim 6, wherein

    the functional layer includes the surface protective layer, and
    the surface protective layer contains at least one of a thermosetting resin or a photocurable resin.

11. The paint substitute film according to claim 6, wherein the easy-adhesion layer has a thickness of 10 nm to 200 nm.

12. A laminated body comprising:

    a metal plate; and
    the paint substitute film according to any one of claims 1 to 11 that is laminated on the metal plate.

13. A metal member obtained by press-forming the laminated body according to claim 12.

14. A vehicle exterior component comprising the laminated body according to claim 12.

15. A method for producing a laminated body, the method comprising:

    a step of heating a metal plate to a temperature that is equal to or more than the melting point of the A layer in the paint substitute film according to any one of claims 1 to 11 and equal to or less than the melting point of the B layer; and
    a step of pressure-bonding the metal plate heated to the temperature and the paint substitute film so that the metal plate and the A layer are in contact with each other.

[FIG. 1]

$$Ua=\int_0^a P\,d\lambda$$
$$Ub=\int_b^{20} P\,d\lambda$$

## INTERNATIONAL SEARCH REPORT

| International application No. |
| --- |
| **PCT/JP2023/042545** |

### A. CLASSIFICATION OF SUBJECT MATTER

*B32B 27/36*(2006.01)i; *B32B 7/027*(2019.01)i; *B32B 15/09*(2006.01)i; *B32B 27/20*(2006.01)i; *B60R 13/00*(2006.01)i
FI:   B32B27/36; B32B7/027; B32B15/09 Z; B32B27/20 A; B60R13/00

According to International Patent Classification (IPC) or to both national classification and IPC

### B. FIELDS SEARCHED

Minimum documentation searched (classification system followed by classification symbols)

B32B1/00-43/00; B60R13/00

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
| --- | --- | --- |
| A | JP 2020-192787 A (TOYOBO FILM SOLUTIONS LTD.) 03 December 2020 (2020-12-03) claims, table 1, example 7 | 1-15 |
| A | JP 2007-203570 A (TEIJIN DUPONT FILMS JAPAN LTD.) 16 August 2007 (2007-08-16) claims, table 1, example 1 | 1-15 |
| A | JP 2011-167872 A (MITSUBISHI PLASTICS, INC.) 01 September 2011 (2011-09-01) entire text | 1-15 |
| A | JP 2014-94521 A (MITSUBISHI PLASTICS, INC.) 22 May 2014 (2014-05-22) entire text | 1-15 |
| A | JP 9-52336 A (DIAFOIL CO., LTD.) 25 February 1997 (1997-02-25) entire text | 1-15 |
| A | JP 2005-119297 A (TOYO KOHAN CO., LTD.) 12 May 2005 (2005-05-12) entire text | 1-15 |

☐ Further documents are listed in the continuation of Box C.      ☑ See patent family annex.

| | | |
| --- | --- | --- |
| * | Special categories of cited documents: | "T" later document published after the international filing date or priority date and not in conflict with the application but cited to understand the principle or theory underlying the invention |
| "A" | document defining the general state of the art which is not considered to be of particular relevance | |
| "D" | document cited by the applicant in the international application | "X" document of particular relevance; the claimed invention cannot be considered novel or cannot be considered to involve an inventive step when the document is taken alone |
| "E" | earlier application or patent but published on or after the international filing date | |
| "L" | document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" | document referring to an oral disclosure, use, exhibition or other means | |
| "P" | document published prior to the international filing date but later than the priority date claimed | "&" document member of the same patent family |

| Date of the actual completion of the international search | Date of mailing of the international search report |
| --- | --- |
| **16 February 2024** | **27 February 2024** |

| Name and mailing address of the ISA/JP | Authorized officer |
| --- | --- |
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (July 2022)

## INTERNATIONAL SEARCH REPORT
### Information on patent family members

International application No.

**PCT/JP2023/042545**

| Patent document cited in search report | | | Publication date (day/month/year) | Patent family member(s) | Publication date (day/month/year) |
|---|---|---|---|---|---|
| JP | 2020-192787 | A | 03 December 2020 | (Family: none) | |
| JP | 2007-203570 | A | 16 August 2007 | (Family: none) | |
| JP | 2011-167872 | A | 01 September 2011 | (Family: none) | |
| JP | 2014-94521 | A | 22 May 2014 | (Family: none) | |
| JP | 9-52336 | A | 25 February 1997 | (Family: none) | |
| JP | 2005-119297 | A | 12 May 2005 | (Family: none) | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2006001114 A

- JP 2020192787 A